# EUROPÄISCHE PATENTSCHRIFT

(11) **EP 1 937 738 B1**
(45) Veröffentlichungstag und Bekanntmachung des Hinweises auf die Patenterteilung: **24.02.2010**
(21) Anmeldenummer: 06807255.2
(22) Anmeldetag: 13.10.2006
(51) Int. Cl.: C08G 18/18, C08G 18/80, C09D 175/04

(54) **METALLFREIE 1K-POLYURETHANSYSTEME**
ONE-COMPONENT POLYURETHANE SYSTEMS THAT ARE DEVOID OF METAL
SYSTEMES POLYURETHANE A UN COMPOSANT EXEMPTS DE METAL

(30) Priorität: 21.10.2005 DE 102005050525
(43) Veröffentlichungstag der Anmeldung: 02.07.2008
(73) Patentinhaber: Evonik Degussa GmbH, 45128 Essen (DE)
(72) Erfinder: SPYROU, Emmanouil, 46514 Schermbeck (DE); WEISS, Volker, 45721 Haltern (DE)
(86) Internationale Anmeldenummer: PCT/EP2006/067391
(87) Internationale Veröffentlichungsnummer: WO 2007/045615

(56) Entgegenhaltungen:
- EP-A- 0 512 213
- EP-A- 1 028 135
- EP-A- 1 526 146
- DE-A- 4 433 367

## Beschreibung

Die Erfindung betrifft metallfreie Einkomponenten-Polyurethansysteme.

Katalysierte Einkomponenten-Polyurethansysteme sind seit langem bekannt. Sie werden beispielsweise in dem Übersichtsartikel von D. A. Wicks und Z. Wicks "Blocked isocyanates III A: Mechanism and chemistry" in Progress in Organic Coatings, 36, (1999), 148 - 172 sowie in den hierin zitierten Literaturstellen ausführlich beschrieben.

Katalysatoren werden in diesen Einkomponenten-Polyurethansystemen eingesetzt, um die Härtungstemperatur herabzusetzen. Dies spart Energie, vermindert die Temperatureinwirkung auf das Substrat und erhöht die mögliche Taktzeit im Beschichtungsbetrieb.

Es gibt zwei große Klassen von üblichen Katalysatoren. Zum einen metallorganische Verbindungen, allen voran zinnorganische Katalysatoren, deren bekanntester Vertreter Dibutylzinndilaurat (DBTL) ist. Diese sind heutzutage wegen ihrer toxikologischen Wirkung in bestimmten Anwendungen (z. B. Textilverarbeitung) in Verruf geraten. Zum anderen basische Amine, wie z. B. 1,4-Diazabicyclo[2,2,2]octan (Dabco). Diese führen aufgrund von N-Oxidbildung zu einer unerwünschten Vergilbung.

Aufgabe war es daher, für Einkomponenten-Polyurethansysteme geeignete Katalysatoren zu finden, die weder Metalle enthalten noch oxidierbare Amine.

Überraschend konnte diese Aufgabe gelöst werden durch eine Katalysatorkombination aus quartären Ammoniumsalzen, die entweder ein Hydroxid, ein Fluorid oder ein Carboxylat als Gegenion enthalten, und einem Säurefänger.

EP 0 512 213 offenbart Einkomponent-Polyurethansysteme enthaltend ein blockiertes Polyisocyanat, ein Polyol und ein quaternäres Ammoniumsalz.

Gegenstand der Erfindung sind Einkomponenten-Polyurethansysteme, enthaltend die Mischung aus
A) mindestens einer blockierten aromatischen, aliphatischen, (cyclo)aliphatischen und/oder cycloaliphatischen Polyisocyanatkomponente;
B) mindestens einem monomeren, oligomeren und/oder polymeren Polyol;
C) mindestens einem quartären Ammoniumsalz, das entweder ein Hydroxid, ein Fluorid oder ein Carboxylat als Gegenion enthält, in einer Konzentration von 0,001 bis 3 %, bezogen auf die Gesamtmasse der Formulierung;
D) mindestens einem Säurefänger in einer Konzentration von 0,1 bis 5 %, bezogen auf die Gesamtmasse der Formulierung;
E) optional weiteren Monoalkoholen, Mono- oder Diaminen;
F) optional Lösemitteln und/oder Wasser;
G) optional weiteren Hilfs- und Zusatzstoffen.

Als Polyisocyanatkomponente A) werden Polyisocyanate eingesetzt, deren Isocyanatgruppen mit einem Blockierungsmittel partiell oder total blockiert sind. Solche Polyisocyanate können optional noch Urethangruppen, Isocyanuratgruppen, Allophanatgruppen, Harnstoffgruppen und/oder Biuretgruppen tragen. Diese Polyisocyanate sind prinzipiell bekannt und in vielen Patenten, wie z. B. DE 27 12 931, DE 29 29 224, DE 22 00 342, DE 196 34 054, EP 0 432 257, US 3 857 818, EP 0 159 117, EP 0 713 871, DE 28 12 252, DE 100 33 097, DE 196 26 886, DE 197 30 670, WO 99/06461 oder DE 34 34 881, beschrieben.

Als Isocyanate zur Herstellung der Polyisocyanatkomponente A) werden Diisocyanate aromatischer, aliphatischer und (cyclo)aliphatischer und/oder cycloaliphatischer Struktur eingesetzt. Derartige Diisocyanate werden z. B. im Houben-Weyl, Methoden der organischen Chemie, Band 14/2, Seite 61 ff. und J. Liebigs Annalen der Chemie, Band 562, Seiten 75 bis 136 beschrieben. Bevorzugt werden Isophorondiisocyanat (IPDI), Hexamethylendiisocyanat (HDI), Diisocyanatodicylcohexylmethan (H₁₂MDI), 2-Methylpentandiisocyanat (MPDI), 2,2,4-Trimethylhexainethylendiisocyanat/2,4,4-Trimethylhexamethylendiisocyanat (TMDI), Norbomandiisocyanat (NBDI), Toluylendiisocyanat (TDI), und/oder Methylendiphenyldiisocyanat (MDI) sowie auch Tetramethylxylylendiisocyanat (TMXDI) verwendet. Ganz besonders bevorzugt werden IPDI, HDI und H₁₂MDI eingesetzt.

Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI.

Die Polyisocyanatkomponente A) kann mit Polyolen kettenverlängert sein. Zur Herstellung der optional Urethangruppen enthaltenden Polyisocyanatkomponente A) wird in einer ersten Stufe zur Kettenverlängerung das Diisocyanat mit einem Polyol umgesetzt. Hierbei wird zu dem bei 100 bis 120 °C vorgelegten Diisocyanat das Polyol unter intensivem Rühren innerhalb von 2 bis 3 Stunden unter Stickstoff und Ausschluss von Feuchtigkeit so zudosiert, dass pro OH-Äquivalent des Polyols mindestens 2, maximal 8, vorzugsweise 4 bis 6 Äquivalente NCO des Diisocyanats zur Reaktion kommen.

Bei den monomeren Diolen handelt es sich beispielsweise um Ethylenglykol, Triethylenglykol, Butandiol-1,4, Pentandiol-1,5, Hexandiol-1,6, 3-Methylpentandiol-1,5, Neopentylglykol, 2,2,4(2,4,4)-Trimethylhexandiol sowie Hydroxypivalinsäureneopentylglykolester.

Bei den monomeren Triolen handelt es sich beispielsweise um Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit.

In Frage kommen auch.Oligo- oder Polyester wie sie unter B) beschrieben werden.

Für nicht urethangruppenhaltige Polyisocyanate kann direkt mit der zweiten Stufe begonnen werden.

In der zweiten Stufe werden dann die (gegebenenfalls aus Stufe eine übrigen) NCO-Gruppen mit einem Blockierungsmittel vollständig blockiert. Die Reaktion kann in Substanz oder auch in Gegenwart geeigneter (inerter) Lösemittel durchgeführt werden. Bevorzugt wird jedoch in Substanz gearbeitet. Dabei wird zu dem Polyol-Diisocyanat-Addukt (bzw. zu dem Polyisocyanat) bei ca. 100 bis 130 °C das Blockierungsmittel portionsweise so zugegeben, dass die Temperatur nicht über 140 °C steigt. Nach Beendigung der Zugabe des Blockierungsmittels wird die Reaktionsmischung zur Vervollständigung der Umsetzung nun etwa 1 bis 2 Stunden bei 130 °C erhitzt. Das Blockierungsmittel wird in solchen Mengen zugegeben, dass auf 1 NCO-Äquivalent des urethanisierten Diisocyanats (bzw. Polyisocyanat) 0,7 bis 1,1 mol Blockierungsmittel, bevorzugt 1 mol, zur Reaktion kommen. Zur Herstellung eignen sich die üblichen Mischaggregate, wie Rührkessel, Extruder, Intensivkneter oder Strömungsrohre.

Als Blockierungsmittel für NCO-Gruppen kommen alle gängigen, bei Temperaturen unterhalb von 200 °C wieder abspaltbaren Verbindungen in Frage, wie z. B. Methylethylketoxim, Acetonoxim, Phenol und Phenol-Derivate, ε-Caprolactam, 1,2,4-Triazol, 2,5-Dimethylpyrazol, Malonsäurediethylester, Acetessigsäureethylester, N-t-Butyl-N-benzylamin oder Diisopropylamin.

Als Polyole B) eignen sich alle in der PUR-Chemie üblicherweise eingesetzten Polyole des Molekulargewichts von mindestens 32, die mindestens zwei Alkoholgruppen aufweisen.

Bei den monomeren Diolen handelt es sich beispielweise um Ethylenglykol, Triethylenglykol, Butandiol-1,4, Pentandiol-1,5, Hexandiol-1,6, 3-Methylpentandiol-1,5, Neopentylglykol, 2,2,4(2,4,4)-Trimethylhexandiol sowie Hydroxypivalinsäureneopentylglykolester.

Bei den monomeren Triolen handelt es sich beispielsweise um Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit.

Es eignen sich auch Polyole, die weitere funktionelle Gruppen enthalten (Oligomere oder Polymere). Hierbei handelt es sich um die an sich bekannten hydroxylgruppenhaltigen Polyester, Polycarbonate, Polycaprolactone, Polyether, Polythioether, Polyesteramide, Polyurethane oder Polyacetale. Sie besitzen ein zahlenmittleres Molekulargewicht von 134 bis 3 500.

Die Polyole werden allein oder in Mischungen verwendet.

Das Verhältnis aus A) und B) wird so gewählt, das auf jedes freie oder frei werdende NCO-Äquivalent von A) in etwa ein dazu reaktives Äquivalent von B) kommt. Das NCO-OH Verhältnis beträgt von 1,5 : 1 bis 0,5 : 1, bevorzugt 1,1 : 1 bis 0,9 : 1.

Bei den Katalysatoren C) handelt es sich um quartäre Ammoniumsalze, die entweder ein Hydroxid, ein Fluorid oder ein Carboxylat als Gegenion enthalten.

Als Katalysatoren kommen in Frage z. B. Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und Tetrabutylammoniumbenzoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid; Tetraoctylammoniumhydroxid, Tetradecylammoniumhydroxid, Tetradecyltrihexylammoniumhydroxid, Tetraoctadecyl-ammoniumhydroxid, Benzyltrimethylammoniumhydroxid, Benzyl-triethylammoniumhydroxid, Trimethylphenylammonium-hydroxid, Triethylmethylammoniumhydroxid, Trimethylvinylammoniumhydroxid, Tetra-methylammoniufluorid, Tetraethylammoniumfluorid, Tetrabutylammoniumfluorid, Tetraoctyl-ammoniumfluorid und Benzyltrimethylammoniumfluorid.

Reaktive säureabfangende Verbindungen D) sind in der Lackchemie allgemein bekannt. So setzen sich beispielsweise Epoxyverbindungen, Carbodiimide, Hydroxyalkylamide oder 2-Oxazoline, aber auch anorganische Salze, wie Hydroxide, Hydrogencarbonate oder Carbonate, mit Säuregruppen bei erhöhten Temperaturen um. In Frage kommen dabei z. B. Triglycidyletherisocyanurat (TGIC), Diglycidylether auf Basis Bisphenol A (wie z. B. EPIKOTE^{®} 828, Shell), Versaticsäureglycidylester, Ethylhexylglycidylether, Butylglycidylether, Polypox R 16 (Pentaerythrittetraglycidylether, UPPC AG) sowie andere Polypoxtypen mit freien Epoxygruppen, β-Hydroxyalkylamide (wie z. B. Vestagon EP HA 320), Degussa AG oder Primid, Ems-Primid), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Calziumhydroxid, Bariumhydroxid, Natriumcarbonat und Calziumcarbonat. Selbstverständlich kommen auch Mischungen solcher Substanzen in Frage. Diese reaktive Verbindungen können in Gewichtsanteilen von 0,1 bis 5 %, bevorzugt von 0,5 bis 3 %, bezogen auf die Gesamtformulierung, eingesetzt werden.

Bei den Verbindungen E) handelt es sich um monomere monofunktionale Alkohole und/oder um monomere mono- oder difunktionale Amine. Beispielsweise kommen dazu in Frage Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol sowie Hydroxymethylcyclohexan. Außerdem Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin. Solche Stoffe E) werden in einer Menge von 0 bis 10 Gew.-%, bezogen auf die Gesamtformulierung, eingesetzt.

Als Lösemittel unter F) kommen alle flüssigen Substanzen in Frage, die nicht mit anderen Inhaltstoffen reagieren, z. B. Aceton, Ethylacetat, Butylacetat, Xylol, Solvesso 100, Solvesso 150, Methoxypropylacetat und Dibasicester. Komponente F) kann variieren zwischen 0 und 70 Gew.-% bezogen auf die Gesamtformulierung.

Zusatzstoffe G), wie Verlaufsmittel, z. B. Polysilicone oder Acrylate, Lichtschutzmittel z. B. sterisch gehinderte Amine, oder andere Hilfsmittel, wie sie z. B. in EP 0 669 353 beschrieben wurden, können in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Falls Lösemittel oder Wasser eingesetzt werden können alle Bestandteile in einer geeigneten Apparatur (z.B. Rührkessel, Dispermat) gemeinsam gelöst beziehungsweise dispergiert werden, wonach die Formulierung einsatzbereit ist. Die Applikation kann dann durch übliche Verfahren erfolgen, z.B. sprühen, spritzen, walzen, gießen, rakeln oder andere. Die Aushärtung erfolgt dann 4 bis 60 Minuten bei einer Temperatur von 120 bis 220 °C, vorzugsweise 6 bis 30 Minuten bei 120 bis 180 °C.

Für den Fall, das kein Lösemittel oder Wasser eingesetzt wird und die Einsatzstoffe fest sind, bietet sich eine Verarbeitung als Pulverlackformulierung an. Dazu kann die Homogenisierung aller Bestandteile zur Herstellung einer Pulverlackzusammensetzung in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern oder elektrostatisches Wirbelsintern, erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C, erhitzt.

Gegenstand der Erfindung ist auch die Verwendung einer Mischung aus
A) mindestens einer blockierten aromatischen, aliphatischen, (cyclo)aliphatischen und/oder cycloaliphatischen Polyisocyanatkomponente;
B) mindestens einem monomeren, oligomeren und/oder polymeren Polyol;
C) mindestens einem quartären Ammoniumsalz, das entweder ein Hydroxid, ein Fluorid oder ein Carboxylat als Gegenion enthält, in einer Konzentration von 0,001 bis 3 %, bezogen auf die Gesamtmasse der Formulierung;
D) mindestens einem Säurefänger in einer Konzentration von 0,1 bis 5 %, bezogen auf die Gesamtmasse der Formulierung;
E) optional weiteren Monoalkoholen, Mono- oder Diaminen;
F) optional Lösemitteln und/oder Wasser;
G) optional weiteren Hilfs- und Zusatzstoffen
als metallfreie Einkomponenten-Polyurethansysteme sowie die Beschichtungen.

Nachfolgend wird der Gegenstand der Erfindung anhand von Beispielen erläutert.

### Beispiele

| Einsatzstoffe | Produktbeschreibung, Hersteller |
|---|---|
| VESTAGON B 1613 | Polyisocyanat mit Triazol blockiert, NCO-Gehalt gesamt: 14,5 - 15,0 %; DEGUSSA AG |
| ALFTALAT AN 739 | OH-Polyester, OH-Zahl: 55 - 60; SZ: 2 - 6; UCB |
| DBTL | Dibutylzinndilaurat, Aldrich |
| Tetraethylammoniumbenzoat (TEAB) | Fluka |
| ARALDIT PT 912 | Glycidylester, Huntsman |
| KRONOS 2160 | Titandioxid, Kronos |
| RESIFLOW PV 88 | Verlaufmittel, Worlee-Chemie |

### Allgemeine Herstellungsvorschrift für Pulverlacke

Die gemahlenen Produkte - erfindungsgemäße Polyisocyanatkomponente, Polyester, Säurefänger, Katalysator, Verlaufmittel, Weißpigment - werden in einem Kollergang innig vermischt und anschließend im Extruder bei 80 bis 140 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 130 bis 150 °C 30 Minuten eingebrannt.

### Pulverlackformulierung: Zusammensetzung

Alle Pulverlackformulierungen enthielten 1 % Resiflow PV 88 und 30 % Titandioxid.

| Zusammensetzung | 1 | A* | B* |
|---|---|---|---|
| B 1613 | 21,78 | 21,84 | 22,69 |
| AN 739 | 44,45 | 44,89 | 46,31 |
| PT 912 | 2,27 | 2,27 | - |
| TEAB | 0,5 | - | - |

| | | | |
|---|---|---|---|
| * nicht erfindungsgemäße Vergleichsbeispiele | | | |

### Beschichtungs-Resultate:

| Nr. | 1 | | | A* | | | B* | | |
|---|---|---|---|---|---|---|---|---|---|
| Härtung 30 min / [°C] | 150 | 140 | 130 | 150 | 140 | 130 | 150 | 140 | 130 |
| Errichsen-Tiefung [mm] | 10 | 10 | 10 | 10 | 10 | 10 | 10 | 10 | 0,5 |
| Kugelschlag (dir.) [in*lb] | 130 | 120 | 80 | 150 | 120 | 20 | 100 | 100 | <10 |
| Kugelschlag (indir.) [in*lb] | 140 | 120 | 60 | 160 | 120 | <10 | 80 | 50 | <10 |

| | | | | | | | | | |
|---|---|---|---|---|---|---|---|---|---|
| *nicht erfindungsgemäße Vergleichsbeispiele | | | | | | | | | |

Nur im erfindungsgemäßen Beispiel 1 ist auch bei 130 °C sowohl die Errichsen-Tiefung als auch der Kugelschlag ausreichend.

## Patentansprüche

1. Einkomponenten-Polyurethansysteme, enthaltend die Mischung aus
A) mindestens einer blockierten aromatischen, aliphatischen, (cyclo)aliphatischen und/oder cycloaliphatischen Polyisocyanatkomponente;
B) mindestens einem monomeren, oligomeren und/oder polymeren Polyol;
C) mindestens einem quartären Ammoniumsalz, das entweder ein Hydroxid, ein Fluorid oder ein Carboxylat als Gegenion enthält, in einer Konzentration von 0,001 bis 3 %, bezogen auf die Gesamtmasse der Formulierung;
D) mindestens einem Säurefänger in einer Konzentration von 0,1 bis 5 %, bezogen auf die Gesamtmasse der Formulierung;
E) optional weiteren Monoalkoholen, Mono- oder Diaminen;
F) optional Lösemitteln und/oder Wasser;
G) optional weiteren Hilfs- und Zusatzstoffen.

2. Einkomponenten-Polyurethansysteme nach Anspruch 1,
**dadurch gekennzeichnet,**
**dass** zur Herstellung der Polyisocyanatkomponente A) Diisocyanate aromatischer, aliphatischer und (cyclo)aliphatischer und/oder cycloaliphatischer Struktur eingesetzt werden.

3. Einkomponenten-Polyurethansysteme nach Anspruch 2,
**dadurch gekennzeichnet,**
**dass** Isophorondiisocyanat (IPDI), Hexamethylendiisocyanat (HDI), Diisocyanatodicylcohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbomandiisocyanat (NBDI), Toluylendiisocyanat (TDI), und/oder Methylendiphenyldiisocyanat (MDI) sowie auch Tetramethylxylylendiisocyanat (TMXDI) eingesetzt werden.

4. Einkomponenten-Polyurethansysteme nach Anspruch 3,
**dadurch gekennzeichnet,**
**dass** IPDI, HDI und H₁₂MDI eingesetzt werden.

5. Einkomponenten-Polyurethansysteme nach mindestens einem der vorhergehenden Ansprüche,
**dadurch gekennzeichnet,**
**dass** die Polyisocyanatkomponente A) vor der Blockierung mit Polyolen kettenverlängert wird.

6. Einkomponenten-Polyurethansysteme nach mindestens einem der vorhergehenden Ansprüche,
**dadurch gekennzeichnet,**
**dass** als Blockierungsmittel Methylethylketoxim, Acetonoxim, Phenol und Phenol-Derivate, ε-Caprolactam, 1,2,4-Triazol, 2,5-Dimethylpyrazol, Malonsäurediethylester, Acetessigsäureethylester, N-t-Butyl-N-benzylamin oder Diisopropylamin verwendet wird.

7. Einkomponenten-Polyurethansysteme nach mindestens einem der vorhergehenden Ansprüche,
**dadurch gekennzeichnet,**
**dass** als Polyole B) Ethylenglykol, Triethylenglykol, Butandiol-1,4, Pentandiol-1,5, Hexandiol-1,6, 3-Methylpentandiol-1,5, Neopentylglykol, 2,2,4(2,4,4)-Trimethylhexandiol sowie Hydroxypivalinsäureneopentylglykolester allein oder in Mischungen eingesetzt werden.

8. Einkomponenten-Polyurethansysteme nach mindestens einem der vorhergehenden Ansprüche,
**dadurch gekennzeichnet,**
**dass** als Polyole B) Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit eingesetzt werden.

9. Einkomponenten-Polyurethansysteme nach mindestens einem der vorhergehenden Ansprüche,
**dadurch gekennzeichnet,**
**dass** als Polyole B) Polyester, Polycarbonate, Polycaprolactone, Polyether, Polythioether, Polyesteramide, Polyurethane oder Polyacetale eingesetzt werden.

10. Einkomponenten-Polyurethansysteme nach mindestens einem der vorhergehenden Ansprüche,
**dadurch gekennzeichnet,**
**dass** als Katalysatoren C) Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und Tetrabutylammoniumbenzoat, Methyltributylammoniumhydroxid, Methyltriethylammoniumhydroxid, Tetramethylammoniumhydroxid, Tetraethylammoniumhydroxid, Tetrapropylammoniuinhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecyl-ammoniumhydroxid, Benzyltrimethylammoniumhydroxid, Benzyl-triethylammoniumhydroxid, Trimethylphenylammoniumhydroxid, Triethylmethylammoniumhydroxid, Trimethylvinylammoniumhydroxid, Tetramethylammoniufluorid, Tetraethylammoniumfluorid, Tetrabutylammoniumfluorid, Tetraoctyl-ammoniumfluorid und Benzyltrimethylammoniumfluorid eingesetzt werden.

11. Einkomponenten-Polyurethansysteme nach mindestens einem der vorhergehenden Ansprüche,
**dadurch gekennzeichnet,**
**dass** als Säure abfangende Verbindung D) Epoxyverbindungen, Carbodiimide, Hydroxyalkylamide, 2-Oxazoline, anorganische Salze, wie Hydroxide, Hydrogencarbonate oder Carbonate eingesetzt werden.

12. Einkomponenten-Polyurethansysteme nach mindestens einem der vorhergehenden Ansprüche,
**dadurch gekennzeichnet,**
**dass** als Säure abfangende Verbindung D) Triglycidyletherisocyanurat (TGIC), EPIKOTE^{®} 828 (Diglycidylether auf Basis Bisphenol A, Schell), Versaticsäureglycidylester, Ethylhexylglycidylether, Butylglycidylether, Polypox R 16 (Pentaerythrittetraglycidylether, UPPC AG), andere Polypoxtypen mit freien Epoxygruppen, Vestagon EP HA 320, (Hydroxyalkylamid, Degussa AG), Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Calziumhydroxid, Bariumhydroxid, Natriumcarbonat oder Calziumcarbonat eingesetzt werden.

13. Einkomponenten-Polyurethansysteme nach mindestens einem der vorhergehenden Ansprüche,
**dadurch gekennzeichnet,**
**dass** als Verbindungen E) Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol sowie Hydroxymethylcyclohexan und außerdem Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin eingesetzt werden.

14. Einkomponenten-Polyurethansysteme nach mindestens einem der vorhergehenden Ansprüche,
**dadurch gekennzeichnet,**
**dass** als Lösemittel F) Aceton, Ethylacetat, Butylacetat, Xylol, Solvesso 100, Solvesso 150, Methoxypropylacetat und Dibasicester eingesetzt werden.

15. Verwendung einer Mischung aus
A) mindestens einer blockierten aromatischen, aliphatischen, (cyclo)aliphatischen und/oder cycloaliphatischen Polyisocyanatkomponente;
B) mindestens einem monomeren, oligomeren und/oder polymeren Polyol;
C) mindestens einem quartären Ammoniumsalz, das entweder ein Hydroxid, ein Fluorid oder ein Carboxylat als Gegenion enthält, in einer Konzentration von 0,001 bis 3 %, bezogen auf die Gesamtmasse der Formulierung;
D) mindestens einem Säurefänger in einer Konzentration von 0,1 bis 5 %, bezogen auf die Gesamtmasse der Formulierung;
E) optional weiteren Monoalkoholen, Mono- oder Diaminen;
F) optional Lösemitteln und/oder Wasser;
G) optional weiteren Hilfs- und Zusatzstoffen
als metallfreie Einkomponenten-Polyurethansysteme.

16. Beschichtungen, enthaltend
A) mindestens eine blockierte aromatische, aliphatische, (cyclo)aliphatische und/oder cycloaliphatische Polyisocyanatkomponente;
B) mindestens ein monomeres, oligomeres und/oder polymeres Polyol;
C) mindestens ein quartäres Ammoniumsalz, das entweder ein Hydroxid, ein Fluorid oder ein Carboxylat als Gegenion enthält, in einer Konzentration von 0,001 bis 3 %, bezogen auf die Gesamtmasse der Formulierung;
D) mindestens einen Säurefänger in einer Konzentration von 0,1 bis 5 %, bezogen auf die Gesamtmasse der Formulierung;
E) optional weitere Monoalkohole, Mono- oder Diamine;
F) optional Lösemittel und/oder Wasser;
G) optional weitere Hilfs- und Zusatzstoffe.

## Claims

1. One-component polyurethane systems containing the mixture of
A) at least one blocked aromatic, aliphatic, (cyclo)aliphatic and/or cycloaliphatic polyisocyanate component;
B) at least one monomeric, oligomeric and/or polymeric polyol;
C) at least one quaternary ammonium salt that contains a hydroxide, a fluoride or a carboxylate as counterion, in a concentration of from 0.001% to 3%, based on the total amount of the formulation;
D) at least one acid scavenger, in a concentration of from 0.1% to 5%, based on the total amount of the formulation;
E) optionally further monoalcohols, monoamines or diamines;
F) optionally solvents and/or water;
G) optionally further auxiliaries and additives.

2. One-component polyurethane systems according to Claim 1,
**characterized in that**
polyisocyanate component A) is prepared using diisocyanates of aromatic, aliphatic, and (cyclo)aliphatic and/or cycloaliphatic structure.

3. One-component polyurethane systems according to Claim 2,
**characterized in that**
isophorone diisocyanate (IPDI), hexamethylene diisocyanate (HDI), diisocyanatodicylcohexylmethane (H₁₂MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), toluylene diisocyanate (TDI) and/or methylenediphenyl diisocyanate (MDI) and also tetramethylxylylene diisocyanate (TMXDI) are used.

4. One-component polyurethane systems according to Claim 3,
**characterized in that**
IPDI, HDI, and H₁₂MDI are used.

5. One-component polyurethane systems according to at least one of the preceding claims,
**characterized in that**
the polyisocyanate component A) is chain-extended with polyols prior to blocking.

6. One-component polyurethane systems according to at least one of the preceding claims,
**characterized in that**
methyl ethyl ketoxime, acetone oxime, phenol or a phenol derivative, ε-caprolactam, 1,2,4-triazole, 2,5-dimethylpyrazole, diethyl malonate, ethyl acetoacetate, N-tert-butyl-N-benzylamine or diisopropylamine is used as blocking agent.

7. One-component polyurethane systems according to at least one of the preceding claims,
**characterized in that**
ethylene glycol, triethylene glycol, butane-1,4-diol, pentane-1,5-diol, hexane-1,6-diol, 3-methylpentane-1,5-diol, neopentyl glycol, 2,2,4(2,4,4)-trimethylhexanediol and neopentyl glycol hydroxypivalate, alone or in mixtures, are used as polyols B).

8. One-component polyurethane systems according to at least one of the preceding claims,
**characterized in that**
trimethylolpropane, ditrimethylolpropane, trimethylolethane, hexane-1,2,6-triol, butane-1,2,4-t r i ol, tris(β-hydroxyethyl)isocyanurate, pentaerythritol, mannitol or sorbitol are used as polyols B).

9. One-component polyurethane systems according to at least one of the preceding claims,
**characterized in that**
polyesters, polycarbonates, polycaprolactones, polyethers, polythioethers, polyesteramides, polyurethanes or polyacetals are used as polyols B).

10. One-component polyurethane systems according to at least one of the preceding claims,
**characterized in that**
tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate or tetrabutylammonium benzoate, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride and benzyltrimethylammonium fluoride are used as catalysts C).

11. One-component polyurethane systems according to at least one of the preceding claims,
**characterized in that**
epoxy compounds, carbodiimides, hydroxyalkyl amides, 2-oxazolines, inorganic salts, such as hydroxides, hydrogencarbonates or carbonates, are used as acid-scavenging compound D).

12. One-component polyurethane systems according to at least one of the preceding claims,
**characterized in that**
triglycidyl ether isocyanurate (TGIC), EPIKOTE^{®} 828 (diglycidyl ether based on bisphenol A, Shell), Versatic acid glycidyl ester, ethylhexyl glycidyl ether, butyl glycidyl ether, Polypox R 16 (pentaerythritol tetraglycidyl ether, UPPC AG), other Polypox grades containing free epoxy groups, Vestagon EP HA 320 (hydroxyalkyl amide, Degussa AG), phenylenebisoxazoline, 2-methyl-2-oxazoline, 2-hydroxyethyl-2-oxazoline, 2-hydroxypropyl-2-oxazoline, 5-hydroxypentyl-2-oxazoline, calcium hydroxide, barium hydroxide, sodium carbonate or calcium carbonate is used as acid-scavenging compound D).

13. One-component polyurethane systems according to at least one of the preceding claims,
**characterized in that**
methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, the isomeric methylcyclohexanol and hydroxymethylcyclohexane, and also dimethylamine, ethylamine, diethylamine, propylamine, dipropylamine, butylamine, dibutylamine, hexylamine, dihexylamine, ethylenediamine, propylenediamine, butylenediamine or hexamethylenediamine are used as compounds E).

14. One-component polyurethane systems according to at least one of the preceding claims,
**characterized in that**
acetone, ethyl acetate, butyl acetate, xylene, Solvesso 100, Solvesso 150, methoxypropyl acetate and Dibasic ester are used as solvent F).

15. Use of a mixture of
A) at least one blocked aromatic, aliphatic, (cyclo)aliphatic and/or cycloaliphatic polyisocyanate component;
B) at least one monomeric, oligomeric and/or polymeric polyol;
C) at least one quaternary ammonium salt that contains a hydroxide, a fluoride or a carboxylate as counterion, in a concentration of from 0.001% to 3%, based on the total amount of the formulation;
D) at least one acid scavenger, in a concentration of from 0.1% to 5%, based on the total amount of the formulation;
E) optionally further monoalcohols, monoamines or diamines;
F) optionally solvents and/or water;
G) optionally further auxiliaries and additives
as metal-free one-component polyurethane systems.

16. Coatings containing
A) at least one blocked aromatic, aliphatic, (cyclo)aliphatic and/or cycloaliphatic polyisocyanate component;
B) at least one monomeric, oligomeric and/or polymeric polyol;
C) at least one quaternary ammonium salt that contains a hydroxide, a fluoride or a carboxylate as counterion, in a concentration of from 0.001% to 3%, based on the total amount of the formulation;
D) at least one acid scavenger, in a concentration of from 0.1% to 5%, based on the total amount of the formulation;
E) optionally further monoalcohols, monoamines or diamines;
F) optionally solvent and/or water;
G) optionally further auxiliaries and additives.

## Revendications

1. Systèmes polyuréthanne monocomposants, contenant le mélange de
A) au moins un composant polyisocyanate aromatique, aliphatique (cyclo)aliphatique et/ou cycloaliphatique, bloqué ;
B) au moins un polyol monomère, oligomère et/ou polymère ;
C) au moins un sel d'ammonium quaternaire, qui contient comme ion opposé soit un hydroxyde, soit un fluorure ou un carboxylate, à une concentration de 0,001 à 3 %, par rapport à la masse totale de la composition ;
D) au moins un capteur d'acide à une concentration de 0,1 à 5 %, par rapport à la masse totale de la composition ;
E) éventuellement encore des monoalcools, mono- ou diamines ;
F) éventuellement des solvants et/ou de l'eau ;
G) éventuellement encore des adjuvants et additifs.

2. Systèmes polyuréthanne monocomposants selon la revendication 1, **caractérisés en ce que** pour la préparation du composant polyisocyanate A) on utilise des diisocyanates à structure aromatique, aliphatique et (cyclo)aliphatique et/ou cycloaliphatique.

3. Systèmes polyuréthanne monocomposants selon la revendication 2, **caractérisés en ce qu'**on utilise de l'isophorone-diisocyanate (IPDI), de l'hexaméthylène-diisocyanate (HDI), du diisocyanatodicyclohexylméthane (H₁₂MDI), du 2-méthylpentane-diisocyanate (MPDI), du 2,2,4-triméthylhexaméthylène-diisocyanate/2,4,4-triméthylhexaméthylène-**diisocyanate** (TMDI), du norbornène-diisocyanate (NBDI), du toluylène-diisocyanate (TDI), et/ou du méthylène-diphényldiisocyanate (MDI) ainsi qu'également du tétraméthylxylylène-diisocyanate (TMXDI).

4. Systèmes polyuréthanne monocomposants selon la revendication 3, **caractérisés en ce qu'**on utilise de l'IPDI, du HDI et du H₁₂MDI.

5. Systèmes polyuréthanne monocomposants selon au moins l'une des revendications précédentes, **caractérisés en ce que** le composant polyisocyanate A) est prolongé dans sa chaîne avec des polyols avant le blocage.

6. Systèmes polyuréthanne monocomposants selon au moins l'une des revendications précédentes, **caractérisés en ce qu'**on utilise comme agent de blocage la méthyléthylcétoxime, l'acétonoxime, le phénol et des dérivés de phénol, l'c-caprolactame, le 1,2,4-triazole, le 2,5-diméthylpyrazole, le malonate de diéthyle, l'acétoacétate d'éthyle, la N-tert-butyl-N-benzylamine ou la diisopropylamine.

7. Systèmes polyuréthanne monocomposants selon au moins l'une des revendications précédentes, **caractérisés en ce qu'**on utilise comme polyols B) l'éthylèneglycol, le triéthylèneglycol, le butanediol-1,4, le pentanediol-1,5, l'hexanediol-1,6, le 3-méthylpentanediol-1,5, le néopentylglycol, le 2,2,4(2,4,4)-triméthylhexanediol ainsi que l'hydroxypivalate de néopentylglycol, seuls ou en mélanges.

8. Systèmes polyuréthanne monocomposants selon au moins l'une des revendications précédentes, **caractérisés en ce qu'**on utilise comme polyols B) le triméthylolpropane, le ditriméthylolpropane, le triméthyloléthane, l'hexanetriol-1,2,6, le butanetriol-1,2,4, le tris(β-hydroxyéthyl)-isocyanurate, le pentaérythritol, le mannitol ou le sorbitol.

9. Systèmes polyuréthanne monocomposants selon au moins l'une des revendications précédentes, **caractérisés en ce qu'**on utilise comme polyols B) des polyesters, polycarbonates, polycaprolactones, polyéthers, polythioéthers, polyesteramides, polyuréthannes ou polyacétals.

10. Systèmes polyuréthanne monocomposants selon au moins l'une des revendications précédentes, **caractérisés en ce qu'**on utilise comme catalyseurs C) le formiate de tétraméthylammonium, l'acétate de tétraméthylammonium, le propionate de tétraméthylammonium, le butyrate de tétraméthylammonium, le benzoate de tétraméthylammonium, le formiate de tétraéthylammonium, l'acétate de tétraéthylammonium, le propionate de tétraéthylammonium, le butyrate de tétraéthylammonium, le benzoate de tétraéthylammonium, le formiate de tétrapropylammonium, l'acétate de tétrapropylammonium, le propionate de tétrapropylammonium, le butyrate de tétrapropylammonium, le benzoate de tétrapropylammonium, le formiate de tétrabutylammonium, l'acétate de tétrabutylammonium, le propionate de tétrabutylammonium, le butyrate de tétrabutylammonium et le benzoate de tétrabutylammonium, l'hydroxyde de méthyltributylammonium, l'hydroxyde de méthyltriéthylammonium, l'hydroxyde de tétraméthylammonium, l'hydroxyde de tétraéthylammonium, l'hydroxyde de tétrapropylammonium, l'hydroxyde de tétrabutylammonium, l'hydroxyde de tétrapentylammonium, l'hydroxyde de tétrahexylammonium, l'hydroxyde de tétraoctylammonium, l'hydroxyde de tétradécylammonium, l'hydroxyde de tétradécyltrihexylammonium, l'hydroxyde de tétraoctadécylammonium, l'hydroxyde de benzyltriméthylammonium, l'hydroxyde de benzyltriéthylammonium, l'hydroxyde de triméthylphénylammonium, l'hydroxyde de triéthylméthylammonium, **l'hydroxyde de** triméthylvinylammonium, le fluorure de tétraméthylammonium, le fluorure de tétraéthylammonium, le fluorure de tétrabutylammonium, le fluorure de tétraoctylammonium et le fluorure de benzyltriméthylammonium.

11. Systèmes polyuréthanne monocomposants selon au moins l'une des revendications précédentes, **caractérisés en ce qu'**on utilise comme composé D) capteur d'acide des composés époxyde, des carbodiimides, d e s hydroxyalkylamides, des 2-oxazolines, des sels inorganiques, tels que des hydroxydes, hydrogénocarbonates ou carbonates.

12. Systèmes polyuréthanne monocomposants selon au moins l'une des revendications précédentes, **caractérisés en ce qu'**on utilise comme composé D) capteur d'acide l'isocyanurate de triglycidyléther (TGIC), l'EPIKOTE® 828 (diglycidyléther à base de bisphénol A, Shell), le versatate de glycidyle, l'éthylhexylglycidyléther, le butylglycidyléther, le Polypox R 16 (tétraglycidyléther de pentaérythritol, UPPC AG), d'autres types de Polypox à groupes époxy libres, le Vestagon EP HA 320 (hydroxyalkylamide, Degussa AG), la phénylène-bisoxazoline, la 2-méthyl-2-oxazoline, la 2-hydroxyéthyl-2-oxazoline, la 2-hydroxypropyl-2-oxazoline , la 5-hydroxypentyl-2-oxazoline, l'hydroxyde de calcium, l'hydroxyde de baryum, le carbonate de sodium ou le carbonate de calcium.

13. Systèmes polyuréthanne monocomposants selon au moins l'une des revendications précédentes, **caractérisés en ce qu'**on utilise comme composant E) le méthanol, l'éthanol, le n-propanol, l'isopropanol, le n-butanol, l'isobutanol, le sec-butanol, les pentanols, hexanols, octanols et nonanols isomères, le n-décanol, le n-dodécanol, le n-tétradécanol, le n-hexadécanol, le n-octadécanol, le cyclohexanol, les méthylcyclohexanols isomères ainsi que l'hydroxyméthylcyclohexane et en outre la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylènediamine.

14. Systèmes polyuréthanne monocomposants selon au moins l'une des revendications précédentes, **caractérisés en ce qu'**on utilise comme solvant F) l'acétone, l'acétate d'éthyle, l'acétate de butyle, le xylène, le Solvesso 100, le Solvesso 150, l'acétate de méthoxypropyle et des esters dibasiques.

15. Utilisation d'un mélange de
A) au moins un composant polyisocyanate aromatique, aliphatique (cyclo)aliphatique et/ou cycloaliphatique, bloqué ;
B) au moins un polyol monomère, oligomère et/ou polymère ;
C) au moins un sel d'ammonium quaternaire, qui contient comme ion opposé soit un hydroxyde, soit un fluorure ou un carboxylate, à une concentration de 0,001 à 3 %, par rapport à la masse totale de la composition ;
D) au moins un capteur d'acide à une concentration de 0,1 à 5 %, par rapport à la masse totale de la composition ;
E) éventuellement encore des monoalcools, mono- ou diamines ;
F) éventuellement des solvants et/ou de l'eau ;
G) éventuellement encore des adjuvants et additifs,
en tant que systèmes polyuréthanne monocomposants exempts de métaux.

16. Revêtements contenant
A) au moins un composant polyisocyanate aromatique, aliphatique (cyclo)aliphatique et/ou cycloaliphatique, bloqué ;
B) au moins un polyol monomère, oligomère et/ou polymère ;
C) au moins un sel d'ammonium quaternaire, qui contient comme ion opposé soit un hydroxyde, soit un fluorure ou un carboxylate, à une concentration de 0,001 à 3 %, par rapport à la masse totale de la composition ;
D) au moins un capteur d'acide à une concentration de 0,1 à 5 %, par rapport à la masse totale de la composition ;
E) éventuellement encore des monoalcools, mono- ou diamines ;
F) éventuellement des solvants et/ou de l'eau ;
G) éventuellement encore des adjuvants et additifs.
